# EUROPÄISCHE PATENTSCHRIFT

(11) **EP 0 523 819 B1**
(45) Veröffentlichungstag und Bekanntmachung des Hinweises auf die Patenterteilung: **25.01.1995**
(21) Anmeldenummer: 92250108.5
(22) Anmeldetag: 07.05.1992
(51) Int. Cl.: B60R 17/02

(54) **Schaltungsanordnung für die Steuerung der Schmierung von Anhängern von Nutzfahrzeugen**
Circuit arrangement for controlling lubrication of utility vehicle trailers
Disposition de circuit pour commander la lufabrication de remorques de véhicules utilitaires

(30) Priorität: 11.07.1991 DE 4123226
(43) Veröffentlichungstag der Anmeldung: 20.01.1993
(73) Patentinhaber: SCHLEICHER GMBH & CO. RELAIS-WERKE KG, D-13597 Berlin (DE)
(72) Erfinder: Böhme, Herbert, W-1000 Berlin 47 (DE); Kotsias, Athanase, W-1000 Berlin 41 (DE); Friedrich, Karl D., W-1000 Berlin 27 (DE)
(74) Vertreter: Pfenning, Meinig & Partner

(56) Entgegenhaltungen:
- EP-A- 0 131 910
- DE-A- 3 630 327
- DE-A- 3 711 673

## Beschreibung

Die Erfindung betrifft eine Schaltungsanordnung für die Steuerung der Schmierung von Anhängern von Nutzfahrzeugen nach dem Oberbegriff des Hauptanspruchs.

Anhängerfahrzeuge müssen während der Fahrt geschmiert werden, um ihren Verschleiß so klein wie möglich zu halten. Der Anhänger eines Nutzfahrzeuges hat keine Dauerstromversorgung, denn er wird nur von der Zugmaschine mit Strom versorgt, wenn bestimmte Ereignisse eintreten, beispielsweise wenn das Rücklicht, das Blinklicht oder das Bremslicht aktiviert wird. Eine auf dem Anhänger eingebaute Schmieranlage wird üblicherweise nur während der Bremsbetätigung an Spannung gelegt. Dieser Tatbestand macht die Schmierung der Anhänger kompliziert, da zur Energiespeicherung der Steuerschaltung für die Schmierung große Kapazitäten notwendig sind. beispielsweise aus der DE-A-37 11 673 sind Schaltungsanordnungen zur Steuerung der Schmierung bekannt, die zwei Zeitkreise aufweisen, von denen der eine zur Bildung der Schmierzeit und der andere zur Bildung der Wiederbereitschaftszeit dient. Die Wiederbereitschaftszeit beträgt dabei üblicherweise einige Sekunden und ist notwendig, damit eine Überschmierung der Anlage durch zu häufige Betätigung der Bremse bzw. durch ihr Stottern vermieden wird. Bereits Wiederbereitschaftszeiten im Sekundenbereich erfordern sehr große Kondensatoren, die den Nachteil der sehr großen Toleranzen mit sich bringen.

Gemäß der Würdigung des Stands der Technik in der DE-A-36 30 327 ist es ferner bekannt, die Anzahl der Bremsvorgänge zu erfassen und bei Erreichen einer vorgegebenen Anzahl die Schmierung auzusteuern. Eine entsprechende Schaltungsanordnung ist jedoch nicht beschrieben.

Der Erfindung liegt die Aufgabe zugrunde, eine Schaltungsanordnung für die Schmierung von Anhängern von Nutzfahrzeugen zu schaffen, die kleine Kondensatoren verlangt und ausreichend genau und zuverlässig arbeitet.

Diese Aufgabe wird erfindungsgemäß durch die Merkmale des Hauptanspruchs gelöst.

Dadurch, daß die Schmierung nicht über den Ablauf von bestimmten Zeiten sondern in Abhängigkeit von einer vorwählbaren Anzahl von Bremsbetätigungen gesteuert wird, kann eine Schaltung eingesetzt werden, die einen kleineren Kondensator verwendet. Ein Mikrocomputer zählt die Anzahl der Bremsbetätigungen und speichert sie und vergleicht sie mit einer voreingestellten Zahl, wobei bei Gleichheit ein Ventil zur Auslösung der Schmierung angesteuert wird. Zur Überprüfung der Höhe der Spannung am Kondensator ist eine Überwachungsschaltung vorgesehen, die mit dem Mikrocomputer verbunden ist. Falls die Spannung unter einen bestimmten Wert fällt, wird die gespeicherte Anzahl der Betätigungen in einem nichtflüchtigen Speicher umgeladen und bei erneuter Betätigung der Bremse, bei der sich der Kondensator schnell wieder auflädt, wieder in den Mikrocomputer geladen. Dadurch geht die Bremsbetätigungszahl nicht verloren, auch wenn die Versorgungsspannung für den Mikrocomputer nicht ausreicht und der Kondensator kann klein sein, da er keine Spannungsversorgung für einen großen Zeitraum liefern muß.

Durch die in den Unteransprüchen angegebenen Maßnahmen sind vorteilhafte Weiterbildungen und Verbesserungen möglich. Dadurch, daß der Mikrocomputer in festen zeitlichen Abständen in seinen Stop-Modus übergeht, aus dem er in festen Abständen von einer Multivibratorschaltung wieder aktiviert wird, wird der Stromverbrauch des Mikrocomputers klein gehalten.

Der Stromverbrauch wird weiterhin verringert dadurch, daß der als EEPROM ausgebildete nichtflüchtige Speicher nur beim Lesen und Schreiben der Anzahl der Bremsbetätigungen von und in den Mikrocomputer mit Spannung versorgt wird.

Die Lebensdauer des nichtflüchtigen Speichers wird erhöht, in dem er fortlaufend bis zu seiner höchsten Adresse beschrieben und dann gelöscht wird (und nicht nach jedem Lesevorgang).

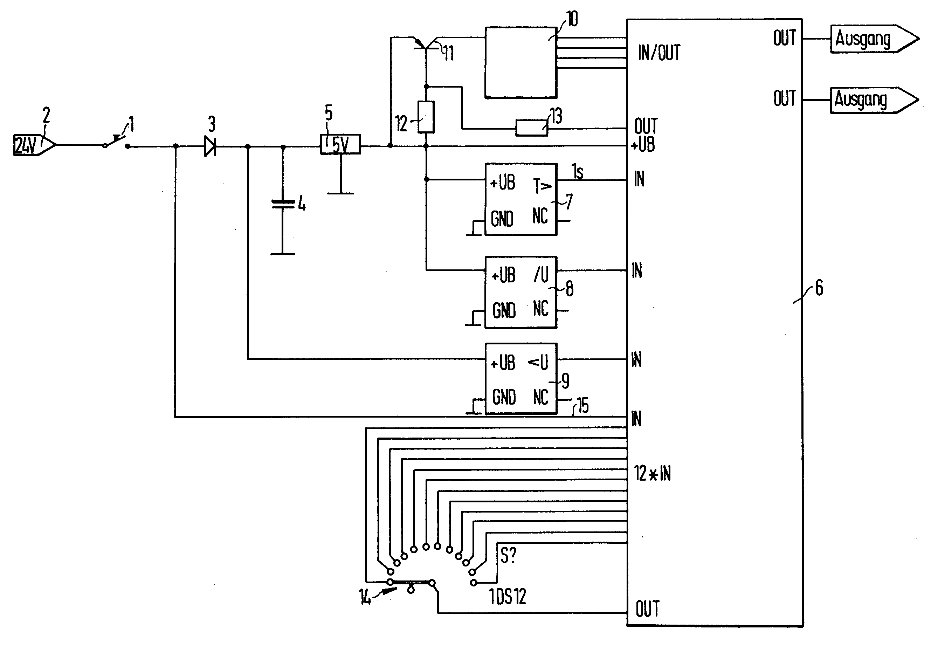

Ein Ausführungsbeispiel der Erfindung ist in der Zeichnung dargestellt und wird in der nachfolgenden Beschreibung näher erläutert. Die einzige Figur zeigt ein Blockschaltbild der erfindungsgemäßen Steuerschaltungsanordnung.

In der Figur ist der Bremsschalter 1 mit einer 24 V Spannungsversorgung 2 verbunden. Der zweite Anschluß des Bremsschalters ist über eine Verpolungsdiode 3 an einen Kondensator 4 angeschlossen, der mit seinem zweiten Anschluß an Masse liegt. Eine Spannungsaufbereitungsschaltung 5 stellt eine konstante Versorgungsspannung von 5 V zur Verfügung. An diese Spannungsversorgung ist ein Mikrocomputer 6, eine Timerschaltung 7 und eine Reset-Schaltung 8 angeschlossen. Die Ausgänge der Timerschaltung 7 und der Reset-Schaltung 8 sind mit dem Mikrocomputer 6 verbunden. Weiterhin ist eine Überwachungsschaltung 9 für die Kondensatorspannung vorgesehen, die vor der Spannungsaufbereitungsschaltung 5 an den Kondensator 4 angeschlossen ist und deren Ausgang mit einem Eingang des Mikrocomputers 6 verbunden ist. Ein weiterer Eingang IN des Mikrocomputers 6 steht über eine Leitung 15 für eine schnelle Bremserkennung mit einem zweiten Anschluß des Bremsschalters 1 in Verbindung. Die Schreib-/Leseein- bzw. -ausgänge eines als EEPROM ausgebildeten flüchtigen Speichers 10 sind mit den Schreib-/Leseein- bzw. - ausgängen des Mikrocomputers 6 verbunden. Die Spannungsaufbereitungsschaltung 5 für die Spannungsversorgung ist über einen als Transistor 11 ausgebildeten Schalter an den nichtflüchtigen Speicher 10 angeschlossen, wobei die Basis des Transistors 11 als Steueranschluß jeweils über Widerstände 12, 13 mit einem Ausgang OUT des Mikrocomputers 6 verbunden ist. Zur Einstellung der gewünschten Anzahl der Bremsbetätigungen ist ein Drehschalter 14 vorgesehen, der an den Mikrocomputer 6 angeschlossen ist. Die Funktion der beschriebenen Schaltung ist folgende. Wenn der Kondensator 4 entladen war, lädt er sich bei einer Betätigung der Bremse und Schließen des Bremsschalters 1 schnell auf, wobei die Verpolungsdiode 3 ein Rückfließen der Ladung des Kondensators 4 in die Bremsleuchten verhindert. Durch Aufladen des Kondensators 4 erhalten der Mikrocomputer 6 und die anderen Schaltkreise 7, 8, 9 ihre Betriebsspannung und die Reset-Schaltung 8 gibt einen "Power-On" Impuls an den Mikrocomputer 6 ab, worauf dieser seinen Betrieb aufnimmt. Die Überwachungsschaltung 9 stellt fest, ob die Spannung am Kondensator 4 größer als ein bestimmter Spannungswert, beispielsweise 8 V, ist, und wenn dies der Fall ist, ist die Mikrocomputer-Betriebsspannung in Ordnung.

Der Mikrocomputer 6 liest nach seinem "Power-On" Impuls das EEPROM 10 aus und prüft, ob der Speicherinhalt sinnvoll ist, wobei der Speicherinhalt die Anzahl der Bremsbetätigungen ist, die noch zu zählen sind, damit die Schmierung eingeleitet wird. Der Speicherinhalt des EEPROM 10 wird von dem Mikrocomputer in einem Register gespeichert.

Die Timerschaltung 7 wird zum Takten freigegeben und der Bremserkennungseingang IN, Leitung 15, wird abgefragt. Wenn ein Bremsimpuls eingetroffen ist (der Eingang liegt dann auf high), wird der Inhalt des Registers des Mikrocomputers um eins dekrementiert und zwischengespeichert, wobei der Mikrocomputer 6 prüft, ob der Inhalt des Registers Null ist. Ist der Inhalt Null, d.h. wurde die Bremse so oft betätigt, wie durch die am Drehschalter 14 eingestellte Zahl vorgegeben ist, wird über einen Ausgang des Mikrocomputers 6 ein Ventil mit einem 100 ms langen Puls geöffnet und Druckluft freigegeben und die Schmierung ermöglicht.

Anschließend wird die am Drehschalter 14 eingestellte Zahl der Bremsbetätigungen erneut gelesen und in dem Register des Mikrocomputers 6 zwischengespeichert. Darüber hinaus wird eine Zeit von beispielsweise 40 sec gestartet, d.h. es werden die von der Timerschaltung 7 im Takt von beispielsweise 1 sec gelieferten Impulse gezählt, wobei erst nach Ablauf dieser Zeit das Ventil mit der nächsten Bremsbetätigung, durch einen weiteren 100 ms Puls geschlossen wird.

Damit der Mikrocomputer 6 nur wenig Strom verbraucht, wird er hauptsächlich im "Stop-Modus" betrieben, in dem der Stromverbrauch um ungefähr drei Zehnerpotenzen geringer ist als im normalen Betrieb. Der Mikrocomputer 6 geht taktweise in den Stop-Modus über und wird von der Timerschaltung 7, die beispielsweise als astabiler Multivibrator mit einem C-MOS-Baustein ausgebildet sein kann, wieder aktiviert.

Immer wenn der Bremsschalter 1 öffnet, wird die Timerschaltung 7 durch den Mikrocomputer 6 zum Schwingen freigegeben und der Computer selbst geht in den Stop-Modus über. Im Sekundentakt wird der Mikrocomputer 6 durch die Impulse der Timerschaltung 7 in den Betriebsmodus versetzt. Wenn die Bremse weiterhin unbetätigt bleibt, geht der Computer wieder in den Stop-Modus zurück. Die Überwachungsschaltung 9 prüft, gesteuert von dem Mikrocomputer 6, taktweise, ob die Spannung am Kondensator 4 unter 8 V fällt. Dabei ist der Kondensator 4 so bemessen, daß er die unterschiedlichen Schaltkreise der Schaltungsanordnung 1 Minute lang mit Spannung versorgen kann, ohne daß eine Bremsbetätigung und somit eine Wiederaufladung erfolgt. Tritt dieser Fall auf, d.h. wird die Bremse 1 Minute lang nicht betätigt, wird die Spannung am Kondensator 4 kleiner als 8 V und der Mikrocomputer 6 lädt den Inhalt seines Registers spätestens nach 1 sec in den nichtflüchtigen Speicher 10. Dabei ist seine Betriebsspannung noch ausreichend hoch, da die Spannung am Kondensator 4 auf 8 V überprüft wird, während die Versorgungsspannung 5 V beträgt.

Wird die Bremse wieder betätigt und lädt sich der Kondensator über die Schwellenspannung auf, so beginnt der oben beschriebene Vorgang von vorn.

Um überflüssigen Stromverbrauch zu vermeiden, wird das EEPROM 10, gesteuert vom Mikrocomputer 6, über den Transistorschalter 11 nur dann an Spannung gelegt, wenn er lesen oder schreiben soll.

Die Lebensdauer eines EEPROM ist abhängig von der Anzahl seiner Schreib- und Löschvorgänge. Um die Lebensdauer des EEPROM in der Schaltungsanordnung zu erhöhen, wird der nichtflüchtige Speicher 10 nicht nach jedem Lesevorgang gelöscht, damit er beim nächsten Speichervorgang wieder beschrieben werden kann, sondern er wird fortlaufend bis zu seiner höchsten Adresse beschrieben. Erst dann wird die Löschung durchgeführt. Auf diese Weise kann die Lebensdauer beispielsweise um den Faktor 16 erhöht werden.

## Patentansprüche

1. Schaltungsanordnung für die Steuerung der Schmierung von Anhängern von Nutzfahrzeugen mit einem die Betriebsspannung vorgebenden Speicherkondensator (4), der sich in Abhängigkeit von dem Betätigen der Bremse des Nutzfahrzeuges auflädt,
**dadurch gekennzeichnet,**
daß ein Mikrocomputer (6) die Anzahl der Bremsbetätigungen zählt und zwischenspeichert und mit einer voreingestellten Zahl vergleicht, wobei bei Gleichheit ein Ventil zur Auslösung der Schmierung angesteuert wird, daß eine Überwachungsschaltung (9) mit dem Mikrocomputer (6) verbunden ist, die feststellt, wenn die Kondensatorspannung unter einen vorgegebenen Wert fällt, wobei im Falle des Unterschreitens des vorgegebenen Wertes die im Mikrocomputer (6) zwischengespeicherte Anzahl der Bremsbetätigungen in einen nichtflüchtigen Speicher (10) umgeladen wird, und daß nach der erneuten Aufladung des Kondensators (4) der Speicherinhalt des nichtflüchtigen Speichers (10) wieder in den Mikrocomputer (6) geladen wird.

2. Schaltungsanordnung nach Anspruch 1, dadurch gekennzeichnet, daß der nichtflüchtige Speicher (10) ein EEPROM ist.

3. Schaltungsanordnung nach Anspruch 1 oder 2, dadurch gekennzeichnet, daß der Mikrocomputer (6) in zeitlichen Abständen in seinen Stop-Modus übergeht und daß eine Timerschaltung (7) vorgesehen ist, die den Mikrocomputer (6) in festen Zeitabständen wieder aus dem Stop-Modus heraus aktiviert.

4. Schaltungsanordnung nach einem der Ansprüche 1 bis 3, dadurch gekennzeichnet, daß der nichtflüchtige Speicher (10) nur bei dem Lesen und Schreiben der Anzahl der Bremsbetätigungen von und in den Mikrocomputer (6) mit Spannung versorgt wird.

5. Schaltungsanordnung nach einem der Ansprüche 1 bis 4, dadurch gekennzeichnet, daß nacheinander die unterschiedlichen Adressen des nichtflüchtigen Speichers (10) angesteuert werden und daß der Speicher (10) gelöscht wird, wenn alle Adressen belegt sind.

6. Schaltungsanordnung nach einem der Ansprüche 1 bis 5, dadurch gekennzeichnet, daß das Ventil zur Schmierung nach einer vorgegebenen Zeit, die auf der Grundlage der von der Timerschaltung (7) gelieferten Signale bestimmt wird, abgeschaltet wird.

7. Schaltungsanordnung nach einem der Ansprüche 1 bis 6, dadurch gekennzeichnet, daß der Kondensator (4) sich bei einmaligem Betätigen der Bremse soweit auflädt, daß seine Ladung zur Spannungsversorgung der Schaltungsanordnung über eine vorgegebene Zeit ohne weitere Bremsbetätigung ausreicht.

## Claims

1. A circuit arrangement for controlling the lubrication of commercial vehicle trailers, comprising a storage capacitor (4), which offers an operating voltage and which is charged in dependence of an activation of the brake of the commercial vehicle, **characterized in that** a microcomputer (6) counts and temporarily stores the number of brake activation and compares it with a preset number, and that in the event of their being identical a valve is activated to trigger the lubrication, that a monitoring circuit (9) is connected to the microcomputer (6) and determines when the capacitor voltage drops below a specified value, in which event the number of brake activations, which is temporarily stored in the microcomputer (6), is transferred into a permanent store (10), and that after renewed recharging of the capacitor (4) the memory content of the permanent store (10) is again loaded into the microcomputer (6).

2. A circuit arrangement according to claim 1, **characterized in that** the permanent store (10) is an EEPROM.

3. A circuit arrangement according to claim 1 or 2, **characterized in that** the microcomputer (6) enters its stop mode at temporal periods and that a timer circuit (7) is provided which activates the microcomputer (6) out of the stop mode in set temporal periods.

4. A circuit arrangement according to one of claims 1 to 3, **characterized in that** the permanent store (10) is fed a voltage only when reading and writing the number of brake activations from/into the microcomputer (6).

5. A circuit arrangement according to one of claims 1 to 4, **characterized in that** the different addresses of the permanent store (10) are selected one after the other, and that the store (10) is cleared when all addresses are taken.

6. A circuit arrangement according to one of claims 1 to 5, **characterized in that** the lubricating valve is switched off after a specified time which is determined on the basis of signals delivered by the timer circuit (7).

7. A circuit arrangement according to one of claims 1 to 6, **characterized in that** the capacitor (4) is charged up during a single activation of the brake to such an extent that its charge is sufficient to supply power to the circuit arrangement for a specified time without further activation of the brake.

## Revendications

1. Disposition de circuit pour la commande du graissage de remorques de véhicules utilitaires munie d'un condensateur de stockage (4) imposant la tension de fonctionnement, qui se charge en fonction de l'action sur le frein du véhicule utilitaire, caractérisée en ce qu'un micro-ordinateur (6) compte et mémorise le nombre d'actions sur le frein et le compare à un nombre prédéterminé, une vanne étant commandée en cas d'égalité pour déclencher le graissage, en ce qu'un circuit de surveillance (9) est relié au micro-ordinateur (6), qui détermine si la tension du condensateur tombe au-dessous d'une valeur prédéterminée, le nombre d'actions sur le frein mémorisé dans le micro-ordinateur (6), en cas de dépassement vers le bas de la valeur prédéterminée, étant transféré à une mémoire non volatile (10), et en ce qu'après le nouveau chargement du condensateur (4) le contenu stocké dans la mémoire non volatile (10) est de nouveau chargé dans le micro-ordinateur (6).

2. Disposition de circuit selon la revendication 1, caractérisée en ce que la mémoire non volatile (10) est une EEPROM.

3. Disposition de circuit selon la revendication 1 ou 2, caractérisée en ce que le micro-ordinateur (6) passe à des intervalles de temps dans son mode d'arrêt et en ce qu'un circuit de temporisation (7) est prévu, qui réactive le micro-ordinateur à des intervalles de temps fixés hors de son mode d'arrêt.

4. Disposition de circuit selon l'une des revendications 1 à 3, caractérisée en ce que la mémoire non volatile (10) n'est alimentée en tension que lors de la lecture et de l'écriture du nombre d'actions sur le frein depuis et vers le micro-ordinateur (6).

5. Disposition de circuit selon l'une des revendications 1 à 4, caractérisée en ce que, l'une après l'autre, les différentes adresses de la mémoire non volatile (10) sont commandées et en ce que la mémoire (10) est effacée lorsque toutes les adresses sont occupées.

6. Disposition de circuit selon l'une des revendications 1 à 5, caractérisée en ce que la vanne destinée au graissage est mise à l'arrêt après une période de temps prédéterminée qui est déterminée sur la base des signaux délivrés par le circuit de temporisation (7).

7. Disposition de circuit selon l'une des revendications 1 à 6, caractérisée en ce que le condensateur (4), lors d'une seule action sur le frein, se charge jusqu'à ce que sa charge suffise pour alimenter en tension la disposition de circuit sur une période de temps prédéterminée sans autre action sur le frein.
